# EUROPÄISCHE PATENTSCHRIFT

(11) **EP 3 682 120 B1**
(45) Veröffentlichungstag und Bekanntmachung des Hinweises auf die Patenterteilung: **01.06.2022**
(21) Anmeldenummer: 18766194.7
(22) Anmeldetag: 05.09.2018
(51) Int. Cl.: F15B 21/04, G01N 15/06, F15B 21/041, G01N 15/14, G01N 15/00

(54) **FILTERAGGREGAT**
FILTER ASSEMBLY
UNITÉ DE FILTRATION

(30) Priorität: 13.09.2017 DE 102017008580
(43) Veröffentlichungstag der Anmeldung: 22.07.2020
(73) Patentinhaber: Hydac Filter Systems GmbH, 66280 Sulzbach/Saar (DE)
(72) Erfinder: FALK, Thorsten, 66125 Saarbrücken (DE)
(74) Vertreter: Bartels und Partner, Patentanwälte
(86) Internationale Anmeldenummer: PCT/EP2018/073858
(87) Internationale Veröffentlichungsnummer: WO 2019/052872

(56) Entgegenhaltungen:
- WO-A1-2010/142403
- WO-A1-2014/026733
- DE-B3- 10 343 457
- DE-C5- 10 343 457
- DE-U1-202009 017 886
- US-A1- 2014 326 086
- "Filteraggregat OF7", Hydac International niehues, 31. März 2017 (2017-03-31), XP055530097, Gefunden im Internet: URL:https://www.niehues.com/userfiles/imag e/datenblaetter/ek-vk2/0203-hydac/020301-f ilter/02030106-mobile-filteraggregate/0203 010601-hydac-mobiles-service-filter-aggreg at-of-7-d7940-de.pdf [gefunden am 2018-12-04]

## Beschreibung

Die Erfindung betrifft ein Filteraggregat, insbesondere als portables Serviceaggregat für hydraulische Anwendungen dienend, mit den Merkmalen im Oberbegriff des Anspruchs 1.

Aus dem Prospekt D7.940.5/02.15 der Anmelderin ist ein Filteraggregat dieser Art mit der Produktbezeichnung OF7CM bekannt. Solche Filteraggregate können zum Befüllen von Hydrauliksystemen, zum Spülen kleiner Hydraulikanlagen sowie zu deren Abreinigung im Nebenstrom eingesetzt werden. Die portable Bauweise ermöglicht auch den Einsatz zur temporären Nebenstromfiltration an Hydraulikanlagen. Gleichzeitig ermöglicht die Einrichtung zur Partikelmessung die Überwachung des Fluids auf Feststoffverschmutzung. Im Stand der Technik kommen hierfür Partikelzähler zum Einsatz, die nach dem Abdunkelungsverfahren arbeiten. Wie in dem Dokument EP 0 427 908 B1 offenbart ist, erfolgt hierbei das Zählen von opaken Partikeln in einem Fluidstrom mittels einer Lichtschranke, deren Lichtstrahl einen Messkanal für das Fluid durchdringt, wobei dem Empfänger der Lichtschranke eine Auswerteelektronik nachgeschaltet ist. Bekanntermaßen wird die Genauigkeit des Zählergebnisses beeinträchtigt, wenn sich im Fluid mitgeführte, nicht gelöste Gasanteile befinden, deren Blasen der optische Partikelzähler aufgrund der verschiedenen Brechungsindizes zwischen Gas (Luft) und Medium fälschlicherweise als Verschmutzung für das Fluid detektieren würde. Daher ist es, wie im Dokument DE 103 43 457 C5 ausgeführt, Stand der Technik, im Strömungsweg vor dem Partikelsensor eine Fluidleitung mit einer solchen Länge vorzusehen, dass sie als Beruhigungsstrecke wirkt, innerhalb deren im Fluid mitgeführte Gase, wie Luft, wieder in Lösung gehen. Ein Gas- oder Lufteintrag wird dadurch nicht mehr als Verschmutzung des Fluids detektiert, sodass die Qualität des Fluids betreffende Fehleinschätzungen vermieden sind.

Ein Prospekt der HYDAC INTERNATIONAL GmbH mit der Nummer D 7.940.5/02.15 beschreibt ein Filteraggregat, insbesondere als portables Serviceaggregat für hydraulische Anwendungen dienend, zumindest bestehend aus einer Motor-Pumpen-Einheit, die mit einem Ausgang im Hauptstrom an ein Filterelement und mit ihrem anderen Ausgang im Nebenstrom an eine Einrichtung zur Partikelmessung im Fluid angeschlossen ist, die einen Partikelsensor aufweist, wobei als Bestandteil der Einrichtung zur Partikelmessung auf der Einströmseite des Partikelsensors eine Fluidleitung vorgebbarer Länge als Beruhigungsstrecke derart vorhanden ist, dass sich im Fluid mitgeführte Gase wieder im Fluid lösen.

Die WO 2014/026733 A1 offenbart, dass als Bestandteil einer Einrichtung zur Partikelmessung auf der Einströmseite des Partikelsensors eine Fluidleitung vorgebbarer Länge als Beruhigungsstrecke derart vorhanden ist, dass sich im Fluid mitgeführte Gase wieder im Fluid lösen können, wobei die Fluidleitung vorgebbarer Länge zu mindestens einer Wicklung zusammengefasst ist.

Ausgehend von diesem Stand der Technik stellt sich die Erfindung die Aufgabe, ein Filteraggregat der eingangs genannten Gattung zur Verfügung zu stellen, das sich durch eine besonders kompakte Bauweise auszeichnet.

Erfindungsgemäß ist diese Aufgabe durch ein Filteraggregat gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Fluidleitung vorgebbarer Länge zu mindestens einer Wicklung zusammengefasst in einem Gehäuseteil des Aggregats aufgenommen ist, dass die jeweilige Wicklung aus einer Spirale im Gehäuseteil gebildet ist, dass in dem Gehäuseteil zwei Spiralen vorhanden sind, die von einer Gehäusewand in abdichtender Weise getrennt sind bis auf eine gemeinsame Fluidverbindungsstelle, und dass die beiden Spiralen hintereinander durchströmt sind.

Im Vergleich zu dem erwähnten, bekannten Filteraggregat, bei dem die die Beruhigungsstrecke bildende Fluidleitung in Form einer 2,5 m langen Schlauchleitung an der Außenseite des Aggregates angebracht ist, ist mit einem Leitungswickel eine Beruhigungsstrecke mit entsprechender Länge in einer besonders kompakten Bauform realisierbar. Bei zu einem Wickel zusammengefasster Leitung ist diese in das Aggregat selbst integrierbar, so dass auch der umgebende Raumbedarf für eine externe Schlauchstrecke entfällt.

Bei an einer Gehäusewand aneinander liegenden Spiralen ist eine große Leitungslänge in besonders flacher Bauweise realisierbar.

Mit Vorteil kann die Anordnung so getroffen sein, dass, in dem Gehäuseteil aufgenommen, die eine Spirale dem Partikelsensor zugewandt und die andere abgewandt ist und dass der Partikelsensor auf das Gehäuseteil aufgesetzt ist.

Mit Vorteil kann die dem Partikelsensor abgewandte Spirale von außen nach innen zu einem Ende der Spirale durchströmt sein, wobei an einer Durchtrittsstelle der abdichtenden Gehäusewand dieses Ende in ein Ende der anderen, dem Partikelsensor zugewandten Spirale übergeht, die, von innen nach außen durchströmt, das Fluid aus der Beruhigungsstrecke an den Partikelsensor weiterleitet.

Bei vorteilhaften Ausführungsbeispielen ist zwischen dem Ausgang der Beruhigungsstrecke und dem Eingang des Partikelsensors ein weiteres Filterelement geschaltet. Nach einer dadurch erfolgten Abreinigung gröberer Verschmutzungen ist vom Partikelsensor die Feinverschmutzung des Fluids zu detektieren.

Für eine Vorspannung in der Beruhigungsstrecke kann hinter dem Partikelsensor ein Vorspannventil geschaltet sein, beispielsweise in Form eines federbelasteten Rückschlagventils.

Bei vorteilhaften Ausführungsbeispielen verfügt die Motor-Pumpen-Einheit über zwei Hydraulikpumpen, die einmal die Fluidversorgung im Hauptstrom und einmal im Nebenstrom sicherstellen.

Hinter dem Ausgang der Nebenstrom-Hydraulikpumpe kann in einem Nebenzweig ein Druckbegrenzungsventil geschaltet sein, das die im Nebenstrom befindliche Beruhigungsstrecke und damit den Partikelsensor absichert.

Der Ausgang der Hauptstrom-Hydraulikpumpe kann über ein Vorspannventil im Nebenzweig abgesichert sein, das, wie das Vorspannventil des Nebenstroms, durch ein federbelastetes Rückschlagventil gebildet sein kann.

In Fluidströmungsrichtung gesehen kann hinter dem im Hauptstrom befindlichen Filterelement eine Fluidverbindung, vorzugsweise mit einer Drossel oder Blende versehen, als Trockenlaufschutz dienend zu der Eingangsseite der Hauptstrom-Hydraulikpumpe geführt sein. Das Vorhandensein des Trockenlaufschutzes verhindert eine Schädigung des Aggregats, wenn sich kein Fluid in der Pumpe befindet. Dadurch ist ein risikoloses Leersaugen von Behältern möglich. Ebenso eignet sich dadurch das Aggregat zur Leckölabsaugung.

Mit Vorteil können die Hauptstrom- und die Nebenstrom-Hydraulikpumpe durch eine einzige Flügelzellenpumpe realisiert sein, die als Doppelpumpe ausgebildet sein kann.

Nachstehend ist die Erfindung anhand eines in der Zeichnung dargestellten Ausführungsbeispiels im Einzelnen erläutert. Es zeigen:
- Fig. 1: die Fluidschaltung des Ausführungsbeispiels in Symboldarstellung;
- Fig. 2: eine perspektivische Schrägansicht des Ausführungsbeispiels, wobei ein mit II bezeichneter Wandbereich aufgeschnitten dargestellt ist; und
- Fig. 3: eine schräg von oben gesehene perspektivische Schrägansicht des Ausführungsbeispiels, wobei in der Art einer Explosionszeichnung ein Partikelzähler und ein Wandteil vom Aggregatgehäuse nach oben abgehoben dargestellt sind.

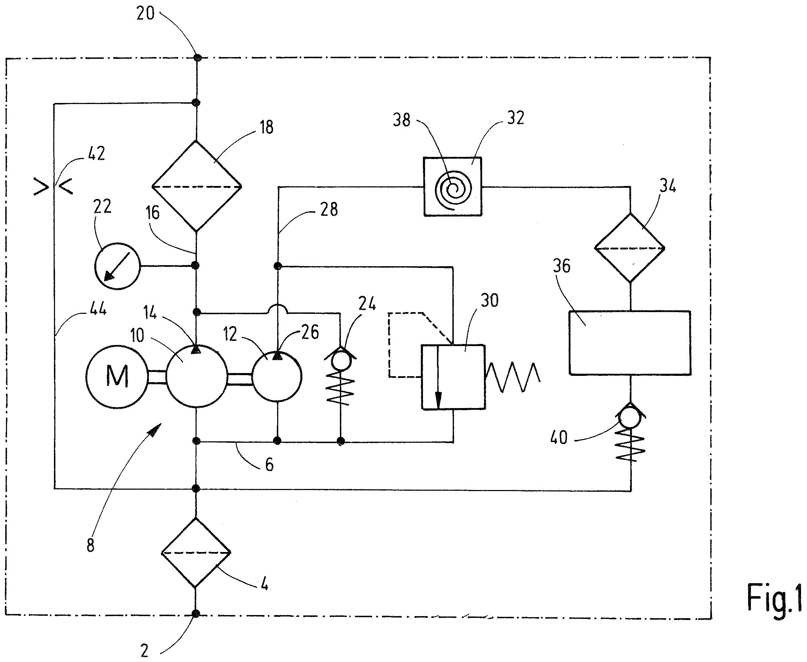

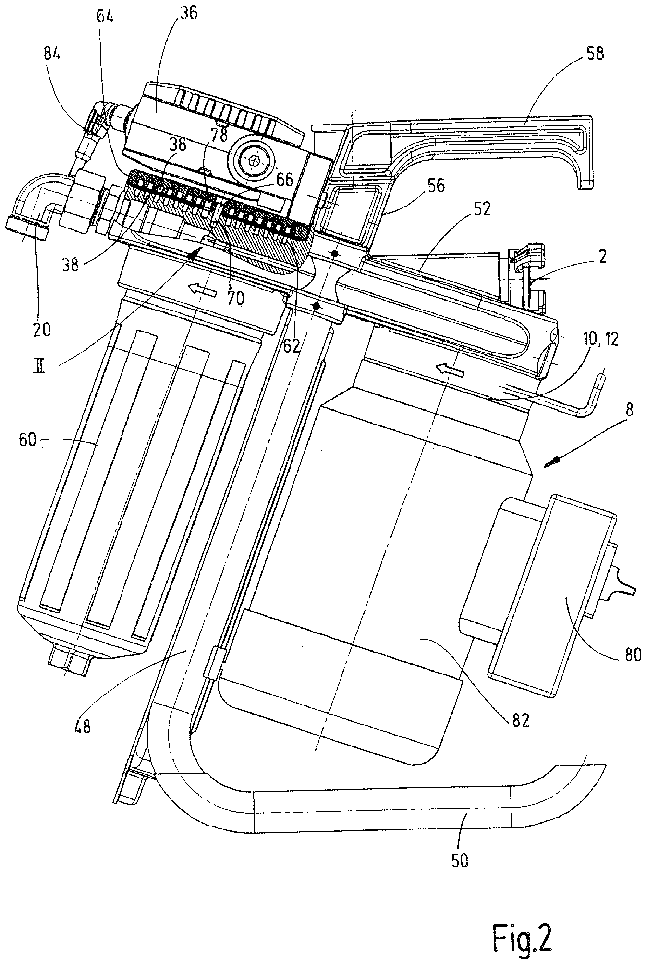

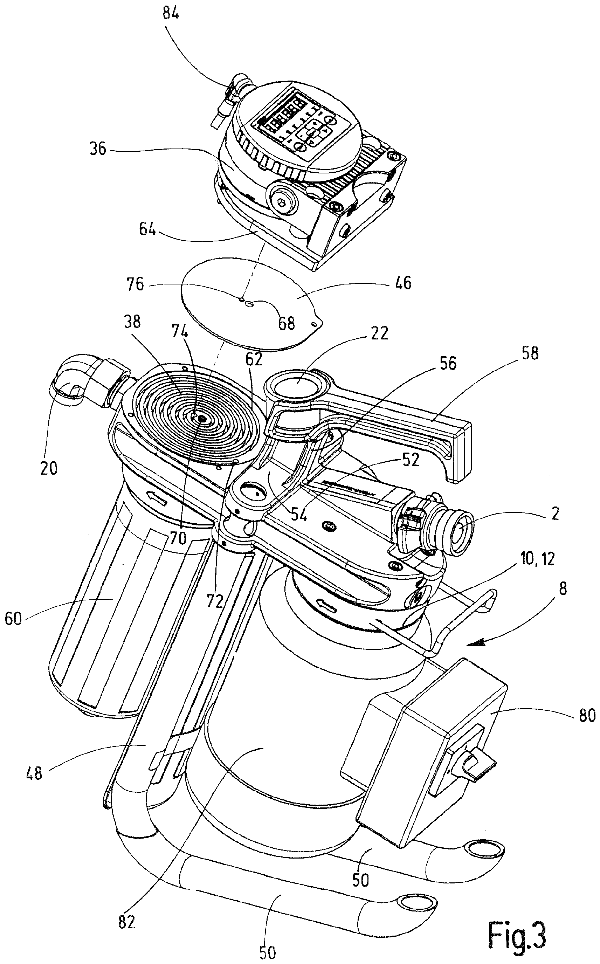

In Fig. 1 ist ein eingangsseitiger Sauganschluss mit 2 bezeichnet, der über ein Schutzsieb 4 mit der Eingangsseite 6 einer Motor-Pumpen-Einheit 8 in Verbindung ist. Diese weist eine Hauptstrom-Hydraulikpumpe 10 und eine Nebenstrom-Hydraulikpumpe 12 auf, die jede durch eine Flügelzellenpumpe gebildet sind. Beim vorliegenden Beispiel handelt es sich um eine Doppelpumpe bekannter Art mit mittels gemeinsamer Welle elektromotorisch angetriebenen Konstantpumpen mit jeweils unterschiedlichem Fördervolumen pro Umdrehung. Derartige Pumpen sind beispielswese unter der Bezeichnung PVF101 (s. Pumpenproduktübersicht D2.902.5/11.14 der Anmelderin) handelsüblich. Eine am Ausgang 14 der Hauptstrompumpe 10 angeschlossene Hauptstromleitung 16 führt über ein einen Partikelfilter bildendes Filterelement 18 zum Aggregat-Ausgangsanschluss 20. Vor dem Eingang des Filterelements 18 ist an der Hauptstromleitung 16 ein Manometer 22 als Verschmutzungsanzeige angeschlossen. Des Weiteren ist die Hauptstromleitung 16 über ein federbelastetes, als Druckbegrenzer wirkendes Rückschlagventil 24 zur Eingangsseite 6 hin abgesichert. Am Ausgang 26 der Nebenstrompumpe 12 ist eine Nebenstromleitung 28 angeschlossen, die, ebenso wie die Hauptstromleitung 16, gegen Überdruck zur Eingangsseite 6 hin abgesichert ist, wobei für die Nebenstromleitung 28 ein Druckbegrenzungsventil 30 vorgesehen ist, das den Druck der Nebenstromleitung 28 auf einen Bereich von etwa 3 bar begrenzt. Die Nebenstromleitung 28 führt über eine Beruhigungsstrecke 32 und ein zweites Filterelement 34 zum Partikelsensor in Form eines nach dem Abdunkelungsprinzip arbeitenden Partikelzählers 36. Die Beruhigungsstrecke 32 ist, wie nachstehend unter Bezug auf Fig. 2 und 3 näher erläutert, durch zwei Leitungsspiralen 38 gebildet. Vervollständigt ist die Schaltung von Fig. 1 durch ein in der Beruhigungsstrecke 32 eine Vorspannung bildendes, federbelastetes Rückschlagventil 40, das den Ausgang des Partikelzählers 36 mit der Eingangsseite 6 der Motor-Pumpen-Einheit 8 verbindet. Zudem ist als Trockenlaufschutz eine mit einer drosselnden Blende 42 versehene Schutzleitung 44 vom Ausgangsanschluss 20 zur Eingangsseite 6 der Motor-Pumpen-Einheit 8 zurückgeführt.

In den Fig. 2 und 3, in denen das Ausführungsbeispiel des erfindungsgemäßen Filteraggregats mit Blick auf die Außenseite des Aggregatgehäuses dargestellt ist, ist dieses mit Ausnahme von Teilbereichen mit geschlossener Außenwand gezeigt, so dass von den in Fig. 1 gezeigten Elementen der Fluidschaltung lediglich der Beruhigungsstrecke 32 zugeordnete Teile sichtbar sind. Genauer gesagt ist in Fig. 2 das Gehäuse bis auf einen mit II bezeichneten, aufgeschnittenen Teilbereich geschlossen und in Fig. 3 ist lediglich der Partikelzähler 36 mit einem zugeordneten Wandteil 46 in vom ansonsten geschlossenen Aggregatgehäuse abgehobener Stellung gezeigt. Das Aggregatgehäuse weist ein zentral gelegenes Gestell mit zwei im Abstand voneinander parallel verlaufenden Holmen in Form von Rundrohren 48 auf, die mit ihren abgebogenen Rohrenden 50 Standfüße bilden, mit denen das Aggregat auf einer Standfläche abstellbar ist. Von den die Fußteile bildenden Rohrenden 50 erstrecken sich die Rundrohre 48 in leicht schräger Neigung nach oben, wobei sie mit den Rohrenden 50 einen Winkel von 70° einschließen. Die oberen Enden der Rundrohre 48 sind mit einem Gehäuseteil in Form eines Deckteils 52 verbunden, das sich als Traverse mit einer schmalen Kastenform im rechten Winkel zu den Rundrohren 48 von diesen mit einem Flügel zur einen Seite und mit einem anderen Flügel zur anderen Seite hin erstreckt. Oberhalb des Deckteils 52 verläuft zwischen den Enden der Rundrohre 48 eine bandförmige Traverse 54, von deren Mitte ein Ansatz 56 nach oben vorsteht, an den sich ein Handgriff 58 anschließt. Unterhalb des sich an die Traverse 54 anschließenden und in den Fig. 2 und 3 nach links verlaufenden Flügels des Deckteils 52 schließt sich das Fiiterelement 18 mit seinem Gehäuse 60 an. Unterhalb des sich von der Traverse 54 nach rechts erstreckenden Flügels des Deckteils 52 schließt sich die Motor-Pumpen-Einheit 8 an. Innerhalb des kastenartigen Deckteils 52 verlaufen die in Fig.1 gezeigten Fluidführungen mit den zugeordneten Schaltungselementen, durch die die Fluidschaltung gebildet ist, die zwischen dem Sauganschluss 2, der sich unterhalb des Handgriffs 58 auf dem Deckteil 52 befindet, und dem Ausgangsanschluss 20 verläuft, der sich am linksseitigen Ende des Deckteils 52 befindet.

Die Beruhigungsstrecke 32 ist aus zwei Spiralen 38 gebildet, von denen die in Fig. 3 sichtbare eine Spirale 38 in einer flachen, tellerartigen Vertiefung 62 in der Oberseite des linksseitigen Flügels des Deckteils 52 aufgenommen ist. Die zweite, in Fig. 3 nicht sichtbare Spirale 38 ist in entsprechender Weise in einer Bodenplatte 64 aufgenommen, die den Träger für den darauf angebrachten Partikelzähler 36 bildet. Dabei sind die Spiralen 38 durch das zwischen ihnen liegende Wandteil 46 voneinander getrennt, das ein Verschlussteil für die Vertiefung 62 im Deckteil 52 bildet. Wie Fig. 2 zeigt, ist die Bodenplatte 64 des Partikelzählers 36 von einer Halteschraube 66 durchgriffen, die über eine zentrale Bohrung 68 im Wandteil 46 mit einer Gewindebohrung 70 im Deckteil 52 verschraubt ist.

Im Betrieb sind die beiden Spiralen 38 hintereinander durchströmt. Dabei verläuft der Strömungsweg von dem in Fig. 3 mit 72 bezeichneten äußeren Ende der im Deckteil 52 sitzenden Spirale 38 zu deren innerem Ende 72 hin. Über eine im Wandteil 46 neben der Bohrung 68 gelegenen Durchtrittsstelle 76 setzt sich der Strömungsweg zum inneren Ende der in der Bodenplatte 64 befindlichen Spirale 38 fort, so dass diese von innen zum äußeren Ende hin durchströmt ist, von dem das Fluid zum Partikelzähler 36 gelangt. Von diesem wiederum setzt sich der Nebenstrom-Kreislauf über das Ventil 40 zur Eingangsseite 6 hin fort. Der Zustrom zu dem den Anfang des Nebenstrom-Kreises bildenden Ende 72 der unteren Spirale 38 (Fig. 3) erfolgt von der oberen Flügelzellenpumpe 12 der Motor-Pumpen-Einheit 8 her über eine innere Fluidleitung im Deckteil 52. In Fig. 2 ist die Fluidverbindungsstelle mit 78 bezeichnet, über die das innere Ende 74 der unteren Spirale 38 über die Durchtrittsstelle 76 mit dem inneren Ende der oberen Spirale 38 in Verbindung ist.

Der Ausgang 14 der die Hauptstrompumpe bildenden unteren Flügelzellenpumpe 10 ist über eine die Hauptstromleitung 16 bildende Fluidführung im Deckteil 52 zum Gehäuse 60 des Filterelements 18 geführt, dessen reinseitiger Ausgang zum Ausgangsanschluss 20 führt. Wie gezeigt, bildet das Filtergehäuse 60 eine Art Patronenfilter vom Anschraubtyp. Die in Fig. 1 mit 44 bezeichnete Schutzleitung ist über das Innere des Deckteils 52 vom Ausgangsanschluss 20 zur Eingangsseite 6 der Motor-Pumpen-Einheit 8 rückgeführt. In den Fig. 2 und 3 ist mit 80 ein Betätigungsschalter für den Elektromotor 82 der Motor-Pumpen-Einheit 8 bezeichnet, deren Pumpen 10 und 12 als Flügelzellen-Doppelpumpe oberhalb des Elektromotors 82 angeordnet und unmittelbar an der Unterseite des Deckteils 52 angebracht sind. Des Weiteren ist in Fig. 2 und 3 der elektrische Anschluss des Partikelzählers 36 mit 84 bezeichnet.

## Patentansprüche

1. Filteraggregat, insbesondere als portables Serviceaggregat für hydraulische Anwendungen dienend, zumindest bestehend aus einer Motor-Pumpen-Einheit (8), die mit einem Ausgang (14) im Hauptstrom an ein Filterelement (18) und mit ihrem anderen Ausgang (26) im Nebenstrom an eine Einrichtung zur Partikelmessung im Fluid angeschlossen ist, die einen Partikelsensor (36) aufweist, wobei als Bestandteil der Einrichtung zur Partikelmessung auf der Einströmseite des Partikelsensors (36) eine Fluidleitung (38) vorgebbarer Länge als Beruhigungsstrecke derart vorhanden ist, dass sich im Fluid mitgeführte Gase wieder im Fluid lösen, **dadurch gekennzeichnet, dass** die Fluidleitung vorgebbarer Länge zu mindestens einer Wicklung (38) zusammengefasst in einem Gehäuseteil (52) des Aggregats aufgenommen ist, dass die jeweilige Wicklung aus einer Spirale (38) im Gehäuseteil (52) gebildet ist, dass in dem Gehäuseteil (52) zwei Spiralen (38) vorhanden sind, die von einer Gehäusewand (46) in abdichtender Weise getrennt sind bis auf eine gemeinsame Fluidverbindungsstelle (78), und dass die beiden Spiralen (38) hintereinander durchströmt sind.

2. Filteraggregat nach Anspruch 1, **dadurch gekennzeichnet, dass**, in dem Gehäuseteil (52) aufgenommen, die eine Spirale (38) dem Partikelsensor (36) zugewandt und die andere abgewandt ist und dass der Partikelsensor (36) auf das Gehäuseteil (52) aufgesetzt ist.

3. Filteraggregat nach Anspruch 2, **dadurch gekennzeichnet, dass** die dem Partikelsensor (36) abgewandte Spirale (38) von außen nach innen zu einem Ende (74) der Spirale (38) durchströmt ist und dass an einer Durchtrittsstelle (76) der abdichtenden Gehäusewand (46) dieses Ende in ein Ende der anderen, dem Partikelsensor (36) zugewandten Spirale (38) übergeht, die, von innen nach außen durchströmt, das Fluid aus der Beruhigungsstrecke (32) an den Partikelsensor (36) weiterleitet.

4. Filteraggregat nach einem der vorstehenden Ansprüche, **dadurch gekennzeichnet, dass** zwischen dem Ausgang der Beruhigungsstrecke (32) und dem Eingang des Partikelsensors (36) ein weiteres Filterelement (34) geschaltet ist.

5. Filteraggregat nach einem der vorstehenden Ansprüche, **dadurch gekennzeichnet, dass** für eine Vorspannung in der Beruhigungsstrecke (32) hinter dem Partikelsensor (36) ein Vorspannventil (40) geschaltet ist.

6. Filteraggregat nach einem der vorstehenden Ansprüche, **dadurch gekennzeichnet, dass** die Motor-Pumpen-Einheit (8) über zwei Hydraulikpumpen (10, 12) verfügt, die einmal die Fluidversorgung im Hauptstrom und einmal im Nebenstrom sicherstellen.

7. Filteraggregat nach Anspruch 6, **dadurch gekennzeichnet, dass** hinter dem Ausgang der Nebenstrom-Hydrauiik-pumpe (12) in einem Nebenzweig ein Druckbegrenzungsventil (30) geschaltet ist.

8. Filteraggregat nach Anspruch 6 oder 7, **dadurch gekennzeichnet, dass** der Ausgang (14) der Hauptstrom-Hydraulik-pumpe (10) über ein Vorspannventil (24) im Nebenzweig abgesichert ist.

9. Filteraggregat nach einem der Ansprüche 6 bis 8, **dadurch gekennzeichnet, dass** in Fluidströmungsrichtung gesehen hinter dem im Hauptstrom (16) befindlichen Filterelement (18) eine Fluidverbindung (44), vorzugsweise mit einer Drossel oder Blende (42) versehen, als Trockenlaufschutz dienend zu der Eingangsseite (6) der Hauptstrom-Hydraulikpumpe (10) geführt ist.

10. Filteraggregat nach einem der Ansprüche 6 bis 9, **dadurch gekennzeichnet, dass** die Hauptstrom- (10) und die Nebenstrom-Hydraulikpumpe (12) durch eine einzige Flügelzellenpumpe realisiert sind.

## Claims

1. Filter unit, especially serving as a portable service unit for hydraulic applications, at least consisting of a motor pump unit (8), which is connected with an outlet (14) in the main flow to a filter element (18) and with its other outlet (26) in the secondary flow to a device for particle measurement in the fluid, said device comprising a particle sensor (36), a fluid pipe (38) of pre-definable length being provided as a calming section as part of the device for particle measurement on the inflow side of the particle sensor (36) such that gases conveyed in the fluid are redissolved in the fluid, **characterised in that** the fluid pipe of pre-definable length, assembled to form at least one winding (38), is received in a housing part (52) of the unit, **in that** the respective winding is formed by a coil (38) in the housing part (52), **in that** two coils (38) are provided in the housing part (52), said coils being separated in a sealing manner, apart from a shared fluid connection point (78), by a housing wall (46), and **in that** the flow passes successively through the two coils (38).

2. Filter unit according to claim 1, **characterised in that**, received in the housing part (52), one coil (38) faces the particle sensor (36) and the other coil faces away from said sensor and **in that** the particle sensor (36) is placed onto the housing part (52).

3. Filter unit according to claim 2, **characterised in that** flow passes through the coil (38) facing away from the particle sensor (36) from the outside to the inside at one end (74) of the coil (38) and **in that**, at a passage point (76) in the sealing housing wall (46), this end transitions into an end of the other coil (38) facing the particle sensor (36), said other coil, through which the flow passes from the inside to the outside, conveying the fluid from the calming section (32) to the particle sensor (36).

4. Filter unit according to any one of the preceding claims, **characterised in that** a further filter element (34) is connected between the outlet of the calming section (32) and the inlet of the particle sensor (36).

5. Filter unit according to any one of the preceding claims, **characterised in that** a pre-load valve (40) is connected behind the particle sensor (36) in the calming section to ensure pre-loading.

6. Filter unit according to any one of the preceding claims, **characterised in that** the motor pump unit (8) comprises two hydraulic pumps (10, 12) which, on the one hand, guarantee the fluid supply in the main flow and, on the other hand, guarantee the fluid supply in the secondary flow.

7. Filter unit according to claim 6, **characterised in that** a pressure-limiting valve (30) is connected in a side branch behind the outlet from the secondary flow hydraulic pump (12).

8. Filter unit according to either claim 6 or claim 7, **characterised in that** the outlet (14) from the main flow hydraulic pump (10) is protected by a pre-load valve (24) in the side branch.

9. Filter unit according to any one of claims 6 to 8, **characterised in that**, when viewed in the fluid flow direction, a fluid connection (44), preferably furnished with a restrictor or orifice plate (42), is mounted behind the filter element (18) located in the main flow (16), serving as dry-run protection, at the inlet side (6) of the main flow hydraulic pump (10).

10. Filter unit according to any one of claims 6 to 9, **characterised in that** the main flow hydraulic pump (10) and the secondary flow hydraulic pump (12) are formed by a single vane pump.

## Revendications

1. Unité de filtration, notamment sous la forme d'une unité portative d'entretien servant à des applications hydrauliques, constituée au moins d'un groupe (8) motopompe, qui est raccordé par une sortie (14) de courant principal à un élément (18) de filtre et par son autre sortie (26) de courant secondaire à un dispositif de mesure de particules dans le fluide, qui a un capteur (36) de particules, dans lequel, comme partie constitutive du dispositif de mesure de particules, il y a, du côté de l'afflux du capteur (36) de particules, un conduit (38) pour du fluide de longueur pouvant être donnée à l'avance, comme section de tranquillisation, de manière à redissoudre dans le fluide des gaz entraînés dans le fluide, **caractérisée en ce que** le conduit pour du fluide de longueur pouvant être donnée à l'avance, rassemblé en au moins un enroulement (38) est reçu dans une partie (52) formant enveloppe de l'unité, **en ce que** l'enroulement respectif est formé d'une spirale (38) dans la partie (52) formant enveloppe, **en ce qu'**il y a dans la partie (52) formant enveloppe deux spirales (38), qui sont séparées d'une façon étanche par une paroi (46) de l'enveloppe, à l'exception d'un point (78) commun de liaison fluidique, et **en ce que** les deux spirales (38) sont parcourues l'une après l'autre.

2. Unité de filtration suivant la revendication 1, **caractérisée en ce que**, reçue dans la partie (52) formant enveloppe, la une spirale (38) est tournée vers le capteur (36) de particules et l'autre en est loin, et **en ce que** le capteur (36) de particules est posé sur la partie (52) formant enveloppe.

3. Unité de filtration suivant la revendication 2, **caractérisée en ce que** la spirale (38), loin du capteur (36) de particules, est parcourue de l'extérieur vers l'intérieur vers une extrémité (74) de la spirale (38), et **en ce qu'**à un point (76) de traversée de la paroi (46) de l'enveloppe donnant l'étanchéité, cette extrémité se transforme en une extrémité de l'autre spirale (38), qui est tournée vers le capteur (36) de particules, qui, parcourue de l'intérieur vers l'extérieur, achemine le fluide de la section (32) de tranquillisation au capteur (36) de particule.

4. Unité de filtration suivant l'une des revendications précédentes, **caractérisée en ce qu'**un autre élément (34) de filtre est monté entre la sortie de la section (32) de tranquillisation et l'entrée du capteur (36) de particules.

5. Unité de filtration suivant l'une des revendications précédentes, **caractérisée en ce qu'**une soupape (40) élévatrice de la pression est montée derrière le capteur (36) de particules pour élever la pression dans la section (32) de tranquillisation.

6. Unité de filtration suivant l'une des revendications précédentes, **caractérisée en ce que** le groupe (8) motopompe dispose de deux pompes (10, 12) hydrauliques, qui assurent d'une part l'alimentation en fluide dans le courant principal et d'autre part dans le courant secondaire.

7. Unité de filtration suivant la revendication 6, **caractérisée en ce qu'**une soupape (30) de limitation de la pression est montée dans une branche secondaire derrière la sortie de la pompe (12) hydraulique de courant secondaire.

8. Unité de filtration suivant la revendication 6 ou 7, **caractérisée en ce que** la sortie (14) de la pompe (10) hydraulique de courant principal est protégée par une soupape (24) d'élévation de la pression dans la branche secondaire.

9. Unité de filtration suivant l'une des revendications 6 à 8, **caractérisée en ce qu'**un élément (18) de filtre, se trouvant, considéré dans le sens de passage du fluide, derrière dans le courant (16) principal, a une liaison (44) fluidique, pourvue de préférence d'un étranglement ou d'un diaphragme (42), servant de protection vis-à-vis d'un manque de fluide, qui va vers le côté (6) d'entrée de la pompe (10) hydraulique de courant principal.

10. Unité de filtration suivant l'une des revendications 6 à 9, **caractérisée en ce que** la pompe (10) hydraulique de courant principal et la pompe (12) hydraulique de courant secondaire sont réalisées par une pompe à palettes unique.
